Europäisches Patentamt

European Patent Office

Office européen des brevets

(19)

(11) Numéro de publication : **0 134 191**
**B1**

(12)

# FASCICULE DE BREVET EUROPÉEN

(45) Date de publication du fascicule du brevet :
19.08.87

(21) Numéro de dépôt : **84810328.9**

(22) Date de dépôt : **02.07.84**

(51) Int. Cl.⁴ : **B 23 H   1/08**

---

(54) **Liquide d'usinage pour machine à usiner par décharges électro-érosives.**

---

(30) Priorité : **29.07.83 CH 4165/83**

(43) Date de publication de la demande :
**13.03.85 Bulletin 85/11**

(45) Mention de la délivrance du brevet :
**19.08.87 Bulletin 87/34**

(84) Etats contractants désignés :
**DE FR GB**

(56) Documents cités :
**FR-A- 2 409 815**
**US-A- 3 334 210**

(73) Titulaire : **CHARMILLES TECHNOLOGIES SA**
**109, rue de Lyon**
**CH-1203 Genève (CH)**

(72) Inventeur : **Schnellmann, Danielle**
**Chotard, à Archamps**
**F-74160 St-Julien en Genevois (FR)**

(74) Mandataire : **Ardin, Pierre et al**
**PIERRE ARDIN & CIE 22, rue du Mont-Blanc**
**CH-1211 Genève 1 (CH)**

## Description

Pour usiner par électro-érosion une électrode-pièce au moyen d'une électrode-outil, on utilise un liquide d'usinage qui est le plus souvent envoyé sous pression dans la zone d'usinage entre les deux électrodes. Ce liquide est parfois constitué par un mélange d'eau déionisée et d'un ou plusieurs additifs.

L'invention a pour but d'améliorer les conditions d'usinage et notamment de permettre d'augmenter la vitesse d'usinage.

A cet effet, l'invention a pour objet un liquide d'usinage constitué par un mélange d'eau déionisée et d'au moins un additif, caractérisé en ce que l'additif est un sel de triéthanolamine et d'acide gras dans une proportion de 0,2 % à 10 % en volume.

L'invention concerne également un procédé de fabrication de ce liquide d'usinage.

Suivant une forme d'exécution intéressante, le liquide d'usinage peut être confectionné en ajoutant un mélange de triéthanolamine et d'acide oléique dans de l'eau déionisée soumise à une forte agitation mécanique. De bons résultats sont obtenus dans le cas du découpage électro-érosif par fil lorsqu'on prévoit une proportion d'un volume de triéthanolamine pour 5 volumes d'acide oléique et que le mélange est introduit dans l'eau dans une proportion de 0,4 % en volume.

La triéthanolamine est une base faible qui joue un rôle d'anti-rouille lorsqu'elle est en faible concentration dans des diélectriques à base d'eau, et qui en augmente le ph. La concentration en ions hydrogène est abaissée, ce qui diminue fortement la précipitation d'hydrogène sur le fer électro-négatif, évitant ainsi l'oxydation de ce dernier.

La mise en présence de triéthanolamine $C_6H_{15}NO_3$ soluble dans l'eau et d'acide oléique $C_{18}H_{34}O_2$, insoluble, entraîne la formation d'un sel de triéthanolamine selon la réaction :

$$acide \ gras + base = sel + eau$$

Ce sel est un savon du fait que l'acide oléique utilisé est un acide gras.

L'acide oléique a l'avantage sur les autres acides gras, éventuellement utilisables, d'être liquide à la température ambiante, ce qui favorise la préparation du mélange.

La réaction n'est jamais complète et le sel formé reste en présence d'acide gras et de triéthanolamine. L'acide oléique restant est maintenu en émulsion stable dans l'eau par le savon formé, de sorte que les pourcentages respectifs d'acide oléique et de triéthanolamine ne sont pas critiques.

Il est également possible d'utiliser un di-oléate de triéthanolamine, savon bien connu, qui s'hydrolyse dans l'eau plutôt que de s'ioniser, redonnant ainsi partiellement de l'acide oléique et de la triéthanolamine.

Il est avantageux d'adjoindre au diélectrique au moins un produit tensio-actif, dont l'effet est de provoquer l'enrobage des particules arrachées au cours de l'usinage par un film mince qui abaisse la tension superficielle entre l'eau et les particules, favorisant ainsi leur entraînement par le diélectrique et diminuant considérablement leur chance de se recoller aux parois de la fente usinée.

Le fait que les particules ne viennent plus se recoller sur les parois de la fente usinée se traduit par une augmentation de la distance d'étincelage, ce qui permet une plus grande vitesse de découpage.

On a constaté, après nettoyage de la pièce découpée, par exemple, au moyen d'un simple dégraissant, que les surfaces découpées ont un aspect brillant agréable, bien supérieur à ce que l'on obtient dans le cas de l'usinage dans l'eau ou l'huile.

Pour que l'effet de la triéthanolamine soit suffisant, le sel de triéthanolamine doit être incorporé dans une proportion d'au moins 0,2 % en volume dans l'eau déionisée. La conductibilité spécifique du fluide d'usinage est de l'ordre de $10^{-5}$ mho · cm.

Enfin, il a été constaté que la proportion intéressante d'additif dépend du genre d'usinage effectué. En pratique, pour un découpage au moyen d'un fil-électrode, la proportion de sel de triéthanolamine est comprise entre 0,2 % et 1 %, tandis que pour l'usinage par enfonçage, cette proportion est choisie entre 1 et 10 %. Au-delà de 10 %, le liquide devient trop conducteur et ne donne plus de bons résultats.

Le liquide d'usinage selon l'invention a aussi pour effet de donner lieu à la formation de boues dans la fente découpée, juste après le passage du fil. Cet effet est utile et avantageux car ces boues adhèrent suffisamment aux parois de la fente découpée pour retenir la portion découpée de la pièce et éviter sa chute à la fin du découpage. Il est donc inutile de prévoir des moyens supplémentaires pour retenir la partie découpée.

Si la formation de boues n'est pas désirée, il suffit d'ajouter au liquide du cyclohexanol dans une proportion de 0,2 % à 10 % en volume, de préférence dans la même proportion que celle de la triéthanolamine, pour supprimer l'effet de formation des boues.

## Revendications

1. Liquide d'usinage pour machine à usiner par décharges électriques érosives, constitué par un mélange d'eau déionisée et d'au moins un additif, caractérisé en ce que l'additif est un sel de triéthanolamine et d'acide gras dans une proportion de 0,2 % à 10 % en volume.

2. Liquide selon la revendication 1, caractérisé en ce qu'il contient en outre du cyclohexanol dans une proportion de 0,2 % à 10 % en volume.

3. Liquide selon la revendication 1, caractérisé en ce qu'il contient en outre un agent tensio-actif.

4. Liquide selon la revendication 1, caractérisé en ce que l'additif est un sel d'acide oléique.

5. Liquide selon la revendication 1, caractérisé en ce que l'additif est un di-oléate.

6. Procédé de fabrication d'un liquide d'usinage selon la revendication 1, caractérisé en ce qu'il consiste à introduire dans l'eau déionisée, soumise à une forte agitation mécanique, entre 0,2 % en 10 % en volume d'un mélange de triéthanolamine et d'un acide gras.

7. Procédé selon la revendication 6, caractérisé en ce que le mélange comprend sensiblement un volume de triéthanolamine pour 5 volumes d'acide oléique.

8. Procédé selon la revendication 6, caractérisé en ce que le mélange est introduit dans l'eau dans une proportion de 0,4 % en volume.

## Claims

1. Machining fluid for electro-erosion discharge machining, comprising a mixture of deionized water and at least one additive, characterized in that the additive is a salt of triethanolamine and a fatty acid in a proportion of 0.2 % to 10 % by volume.

2. Fluid according to claim 1, characterized in that it further contains cyclohexanol in a proportion of 0.2 % to 10 % by volume.

3. Fluid according to claim 1, characterized in that it further contains a surface tension active agent.

4. Fluid according to claim 1, characterized in that the additive is a salt of oleic acid.

5. Fluid according to claim 1, characterized in that the additive is a di-oleate.

6. Process for preparing for manufacturing a machining fluid according to claim 1, characterized in that it comprises adding to the deionized water, under strong mechanical stirring, between 0.2 % and 10 % by volume of a mixture of triethanolamine and a fatty acid.

7. Process according to claim 6, characterized in that the mixture comprises substantially one volume of triethanolamine and five volumes of oleic acid.

8. Process according to claim 6, characterized in that the mixture is added to the water in a proportion of 0.4 % by volume.

## Patentansprüche

1. Bearbeitungsflüssigkeit für Funkenerosionsmaschine, welche aus einem Gemisch von deionisiertem Wasser und zumindest einem Zusatz besteht, dadurch gekennzeichnet, dass der Zusatz ein Salz von Triäthanolamin und Fettsäure im Volumenverhältnis von 0,2 % bis 10 % ist.

2. Bearbeitungsflüssigkeit gemäss Anspruch 1, dadurch gekennzeichnet, dass sie ausserdem Cyclohexanol im Volumenverhältnis von 0,2 bis 10 % enthält.

3. Bearbeitungsflüssigkeit gemäss Anspruch 1, dadurch gekennzeichnet, dass sie ausserdem ein oberflächenaktives Mittel enthält.

4. Bearbeitungsflüssigkeit gemäss Anspruch 1, dadurch gekennzeichnet, dass der Zusatz eine Oleinsäure ist.

5. Bearbeitungsflüssigkeit gemäss Anspruch 1, dadurch gekennzeichnet, dass der Zusatz ein Dioleat ist.

6. Verfahren zur Herstellung einer Bearbeitungsflüssigkeit gemäss Anspruch 1, dadurch gekennzeichnet, dass dieses darin besteht, unter starkem mechanischen Rühren dem deionisierten Wasser zwischen 0,2 und 10 Volumenprozente von einem Gemisch von Triäthanolamin und Fettsäure zuzuführen.

7. Verfahren gemäss Anspruch 6, dadurch gekennzeichnet, dass das Gemisch einen Volumenteil von Triäthanolamin auf 5 Volumenteile von Fettsäure aufweist.

8. Verfahren gemäss Anspruch 6, dadurch gekennzeichnet, dass das Gemisch in einem Volumenverhältnis von 0,4 % dem Wasser zugeführt wird.